# EUROPÄISCHE PATENTSCHRIFT

(11) **EP 3 701 583 B1**
(45) Veröffentlichungstag und Bekanntmachung des Hinweises auf die Patenterteilung: **22.11.2023**
(21) Anmeldenummer: 18796581.9
(22) Anmeldetag: 28.09.2018
(51) Int. Cl.: H01M 10/0565, H01M 10/052, H01M 10/054, H01M 12/08, C08B 37/16, C08J 5/20, C08G 83/00, C08L 5/16

(54) **LÖSUNGSMITTELFREIER FESTKÖRPERELEKTROLYT**
SOLVENT-FREE SOLID-STATE ELECTROLYTE
ÉLECTROLYTE SOLIDE SANS SOLVANT

(30) Priorität: 27.10.2017 DE 102017010000
(43) Veröffentlichungstag der Anmeldung: 02.09.2020
(73) Patentinhaber: Forschungszentrum Jülich GmbH, 52425 Jülich (DE)
(72) Erfinder: BOSKAMP, Laura, 28215 Bremen (DE); BRUNKLAUS, Gunther, 48161 Münster (DE); CEKIC-LASKOVIC, Isidora, 48161 Münster (DE); WINTER, Martin, 48149 Münster (DE)
(86) Internationale Anmeldenummer: PCT/DE2018/000278
(87) Internationale Veröffentlichungsnummer: WO 2019/080950

(56) Entgegenhaltungen:
- CN-A- 107 195 965
- DE-T2- 69 505 254
- US-A- 5 110 694
- LING-YUN YANG ET AL: "Transferring Lithium Ions in Nanochannels: A PEO/Li + Solid Polymer Electrolyte Design", ANGEWANDTE CHEMIE INTERNATIONAL EDITION, Bd. 53, Nr. 14, 5. März 2014 (2014-03-05), Seiten 3631-3635, XP055529557, DE ISSN: 1433-7851, DOI: 10.1002/anie.201307423 in der Anmeldung erwähnt
- LAURA IMHOLT ET AL: "Supramolecular Self-Assembly of Methylated Rotaxanes for Solid Polymer Electrolyte Application", ACS MACRO LETTERS, Bd. 7, Nr. 7, 5. Juli 2018 (2018-07-05), Seiten 881-885, XP055529982, ISSN: 2161-1653, DOI: 10.1021/acsmacrolett.8b00406
- LAURA IMHOLT ET AL: "Grafted polyrotaxanes as highly conductive electrolytes for lithium metal batteries", JOURNAL OF POWER SOURCES, Bd. 409, 31. August 2018 (2018-08-31), Seiten 148-158, XP055529949, CH ISSN: 0378-7753, DOI: 10.1016/j.jpowsour.2018.08.077
- YING-CHENG LIN ET AL: "Solid polymer electrolyte based on crosslinked polyrotaxane", POLYMER., Bd. 136, 27. Dezember 2017 (2017-12-27), Seiten 121-127, XP055529992, GB ISSN: 0032-3861, DOI: 10.1016/j.polymer.2017.12.046

## Beschreibung

Die Erfindung bezieht sich auf das Gebiet der kommerziellen, wiederaufladbaren Lithium-Ionen Batterien und insbesondere auf trockene, lösungsmittelfreie Festelektrolyte, die in solchen Lithium-lonen-Batterien eingesetzt werden können. Insbesondere betrifft die Erfindung ein neues Verfahren zur Herstellung um eines solchen Elektrolyten sowie neue Lithiumionen-Sekundärbatterien.

### Stand der Technik

In den meisten kommerziellen wiederaufladbaren Lithium-lonen Batterien werden brennbare Flüssigelektrolyte verwendet. Große Nachteile bei diesen Systemen sind zum einen das hohe Sicherheitsrisiko der flüssigen Elektrolyte ^{[1]} und zum anderen die Alterungsbeständigkeit dieser Elektrolyte. ^{[2,,3]} Daher geht die Forschung immer mehr in Richtung weitgehend lösungsmittelfreier Festkörperbatterien, bei denen der Flüssigelektrolyt z. B. durch Polymerelektrolyt, Keramik oder Glas ersetzt wird.

Durch den Einsatz lösungsmittelfreier Festkörper-Elektrolyte wird die Sicherheit und Alterungsbeständigkeit der Batterien deutlich erhöht. Anorganische keramische Festkörper-Elektrolyte zeichnen sich durch hohe Leitfähigkeiten aus, sind aber bislang nicht technisch anwendbar, da der elektrische Widerstand zwischen Elektrolyt und Kathode oft sehr hoch ist und die Verarbeitung solcher Festkörperelektrolyte meist schwierig ist, auch eine hinreichende Stabilität gegenüber Lithium-Metall ist nicht gewährleistet. ^{[4,5]}

In kommerziell erhältlichen Lithium-Polymer-Batterien (LiPo) wird häufig das Polymer Polyethylenoxid (PEO) verwendet ^{[6]}, allerdings ist die erreichbare ionische Leitfähigkeit von PEO bzw. PEO-Derivaten bei Raumtemperatur zu gering, um hohe Leistungen zu erzielen. ^{[7,8,9]}

In vielen Arbeiten wird daher versucht, die Leitfähigkeit der Polymer-Elektrolyte durch chemische Modifizierungen von PEO, Bildung von Co-Polymeren oder Verwendung anderer Polymerklassen (Polycarbonate, Polysiloxane, Polyphosphazene etc.) gezielt zu erhöhen. ^{[10,11,12,13]}

Auch Gel-Polymer-Elektrolyte, bei denen durch Zusatz (von bis zu 90 Gew.-%) an ionischen Flüssigkeiten ^{[14,15]} oder flüssigen Lösungsmitteln ^{[16,17]} versucht wird, höhere ionische Leitfähigkeiten zu erzielen, sind bereits in der Literatur beschrieben.

Jedoch kann in solchen Fällen nicht mehr von einem reinen Festkörper-Elektrolyten gesprochen werden, und die Sicherheitsrisiken sowie etwaige mechanische Instabilitäten bleiben bestehen. Zudem ist der Einsatz ionischer Flüssigkeiten derzeit noch sehr kostenintensiv und oft nicht besonders umweltfreundlich. ^{[13]}

Zudem wird aus den vorhandenen Arbeiten sichtbar, dass insbesondere Zyklisierungen von elektrochemischen Zellen mit Lithium-Metallelektroden, die sehr wichtig für die kommerzielle Anwendung sind, hinsichtlich der erzielbaren ionischen Leitfähigkeit (im Bereich 10⁻⁸ bis 10⁻⁶ S/cm bei Raumtemperatur), der Möglichkeit zur Schnellladefähigkeit sowie langfristig stabiler Zyklisierung mit sehr hohen Coulombischen Effizienzen (Ladewirkungsgrad, berechnet aus dem Verhältnis der Lade- zu Entladekapazität) noch erheblich verbessert werden müssen.

In CN 107 195 965 A wird ein Polymerelektrolyt offenbart, der UPF6 in EC/EMC/DEC (1/1/1) (mit EC= Ethylencarbonat, EMC= Ethyl-Methylcarbonat und DEC= Diethylcarbonat), Cucurbituril und PEO beinhaltend.

Darüber hinaus wird in vielen Arbeiten kein trockener, d. h. lösungsmittelfreier Polymer-Elektrolyt verwendet, da bereits durch recht geringe Anteile an Flüssigelektrolyt angemessen hohe ionische Leitfähigkeiten (10⁻³ bis 10⁻² S/cm) sowie notwendiger Kontakt zur Kathode gewährleistet werden kann. Allerdings können diese Anteile des Flüssigelektrolyten das Sicherheitsrisiko mittelfristig signifikant erhöhen. Bestehende Arbeiten, in denen nur rein trockene Elektrolyte verwendet werden, nutzen überwiegend sehr langsame Lade- und Entladeströme (Raten von < 1 C) um damit angemessene nutzbare spezifische Kapazitäten zu erzielen. ^{[10,18,19,20,21]}

Im Sinne künftiger, flächendeckender Elektromobilität ist die Schnellladefähigkeit von Batterien (bei Raten von ≥ 1 C) von großer Bedeutung und wünschenswert, um notwendige Aufenthalte an Stromtankstellen für Elektroautos sinnvoll zu begrenzen. Zudem sollte die Batterie konstant hohe spezifische Kapazitäten über möglichst viele Lade- und Entladezyklen aufweisen, um diese trockenen, überwiegend sicheren Polymer-Elektrolyte für die kommerzielle Anwendung nutzbar zu machen.

So sind aus US 5 110 694 A ein lösungsmittelfreier Polymerelektrolyt bekannt, der aus PEO, Kronenether 12CR4 und LiClO₄ besteht und eine stark erhöhte ionische Leitfähigkeit aufweist. Das zur Auftragung des Elektrolytfilmes verwendete Lösungsmittel (CH3CN) wird vor der Anwendung in einer Batterie im Vakuum entfernt.

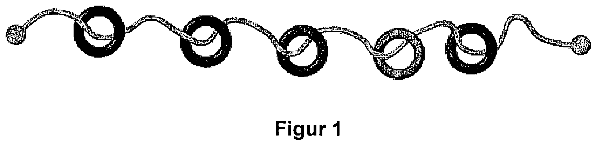

Polyrotaxane sind supramolekulare Strukturen, bei denen ringförmige (zyklische) Moleküle auf einem linearen Polymer aufgefädelt vorliegen (siehe Figur 1). Cyclodextrine sind die bekanntesten ringförmigen Moleküle, die bei diesen Strukturen als Wirtsmolekül verwendet werden. Neben Cyclodextrinen weisen auch Kronenether und andere makrozyklische Moleküle, wie Pillar[n]aren mit n = 5 bis 10, Cucurbituril oder Calix[n]aren mit n = 4 bis 8, die Eigenschaft auf, sich auf einem linearen Polymer aufzufädeln. Bei Polyrotaxanen kann zwischen Haupt- und Seitenketten-Polyrotaxanen unterschieden werden. Pillar[n]arene sind makrozyklische Moleküle, die aus 1,4- Hydrochinoneinheiten aufgebaut sind, welche in paraStellung miteinander verbunden sind. Sie ähneln strukturell den Cucurbiturilen und Calixarenen, die eine wichtige Rolle in der Wirt-Gast-Chemie spielen. Cucurbiturile sind ebenfalls makrozyklische Moleküle, die aus Glycoluril (=C₄H₂N₄O₂=) Monomereinheiten aufgebaut sind, die durch Methylenbrücken (-CH₂-) verbunden sind und Sauerstoffatome an den Rändern aufwesien. Sie bilden teilweise geschlossene Hohlräume aus. Bei Calix[n]aren handelt es sich ebenfalls um ein makrozyklische Moleküle oder um zyklische Oligomere auf Basis eines Hydroxyalkylierungsprodukts aus einem Phenol und einem Aldehyd mit n = 4 bis 8.

Die linearen Polymerketten können vorzugsweise an den Enden sterisch anspruchsvolle "Stopper" aufweisen, die verhindern, dass die ringförmigen Moleküle von dem linearen Polymer abgleiten. Als geeignete Stopper kommen dabei insbesondere sperrige, voluminöse funktionelle Gruppen in Frage, die an den Enden das lineare Polymer modifizieren. Die linearen Polymerketten ähneln in dieser Form also eher Hanteln.

Cyclodextrine sind eine Klasse von Verbindungen, die zu den cyclischen Oligosacchariden gehören. Sie stellen ringförmige Abbauprodukte von Stärke dar. Sie bestehen aus α-1,4-glykosidisch verknüpften Glukosemolekülen. Dadurch entsteht eine toroidale Struktur mit einem zentralen Hohlraum.

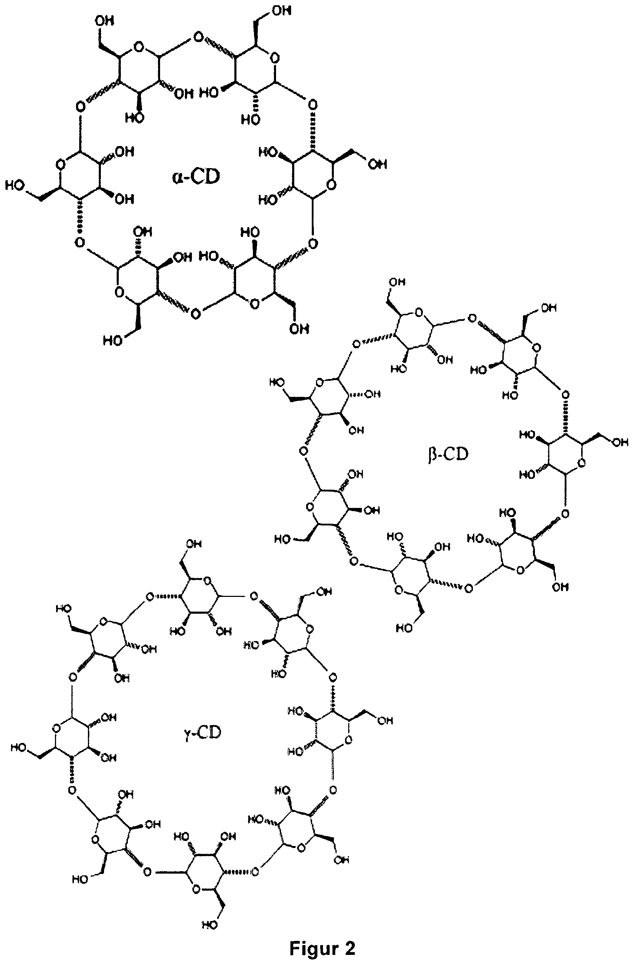

Je nach Anzahl der sie aufbauenden Glukoseeinheiten werden die Cyclodextrine unterschiedlich benannt (siehe Figur 2). Mithilfe eines griechischen Buchstabens als Präfix unterscheidet man:
- α-Cyclodextrin: n = 6 Glukosemoleküle (Hohlraumdurchmesser/-höhe: 4,7..5,3/7,9 Ä)
- β-Cyclodextrin: n = 7 Glukosemoleküle (Hohlraumdurchmesser/-höhe: 6,0..6,5/7,9 Å)
- γ-Cyclodextrin: n = 8 Glukosemoleküle (Hohlraumdurchmesser/-höhe: 7,5..8,3/7,9 Å)

Zwischen dem Polymer und dem Cyclodextrin herrschen dabei keine kovalenten Wechselwirkungen. Der hydrophobe Charakter des Innenraums der Cyclodextrine bietet jedoch einen energetischen Vorteil für das hydrophobe Polymer im Vergleich zu hydrophilen Wassermolekülen. Sobald Cyclodextrine in Wasser gelöst vorliegen, befinden sich stets hydrophile Wassermoleküle im hydrophoben Hohlraum der Cyclodextrine, was energetisch gesehen eher unvorteilhaft ist. Wird sodann ein hydrophobes Polymer hinzugegeben, werden die Wassermoleküle aus dem Hohlraum verdrängt und Energie wird freigesetzt.

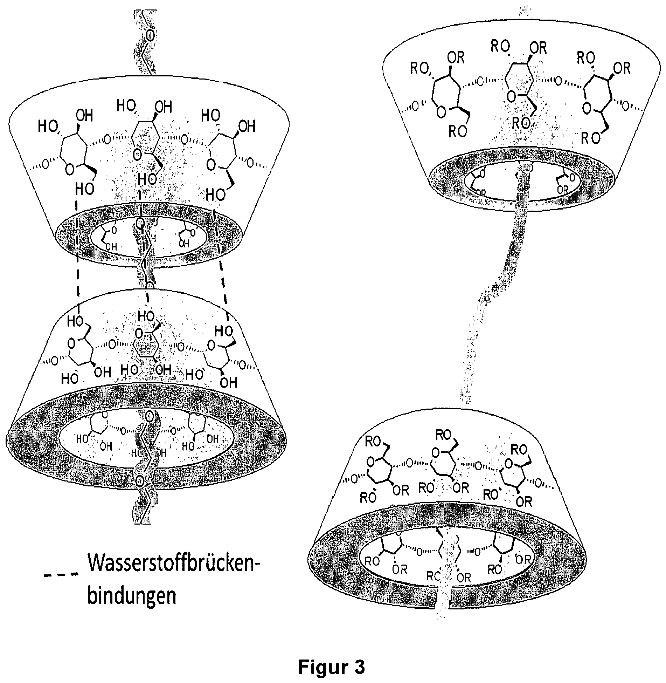

Da die Cyclodextrine aus Glukose-Molekülen aufgebaut sind, weisen diese viele Hydroxylgruppen auf, wodurch sich zwischen den jeweiligen Cyclodextrinen eine Vielzahl stabilisierender Wasserstoffbrückenbindungen ausbilden kann. Diese können sowohl innerhalb des Cyclodextrinrings ausgebildet werden, als auch zwischen benachbart angeordneten Cyclodextrinen auf einer Polymerkette oder aber auch zwischen zwei Cyclodextrinen benachbarter Polymerketten. Dadurch entstehen typischerweise mehr oder weniger starre, gerichtete "Röhren" oder auch Kanäle (Figur 3, links).

Polyrotaxane sowie Pseudo-Polyrotaxane (Rotaxane ohne Stopper) wurden vereinzelt zur Anwendung als Elektrolyt untersucht, wobei durch die spezielle Struktur der Cyclodextrinkanäle ein schnellerer Transport der Lithium-Ionen gewährleistet und somit hohe ionische Leitfähigkeiten erzielt werden sollte. Jedoch ist die bei bisher bekannten Systemen erreichbare ionische Leitfähigkeit noch deutlich zu gering (typischerweise im Bereich von 10⁻⁷ - 10⁻⁵ S cm⁻¹ bei 60 °C), um damit elektrochemische Zyklisierungen durchführen zu können. ^{[22,23,24]}

DE 695 05 254 T2 offenbart eine lösungsmittelfreie Polymerelektrolytschicht, die PEO und modifiziertes Li-Maleat-Cyclodextrin oder Lithiumsuccinoylethyl Cyclodextrin enthält. Das Polyrotaxane wird blockiert mit einer Methacrylamidgruppe. Diese Polymerelektrolytschicht wird zusammen mit Lösungsmittel in Batterien verwendet. Kronenether werden als Äquivalente zu Cyclodextrin offenbart.

Laura Imholt et al.: "Supramolecular Self-Assembly of Methylated Rotaxanes for Solid Polymer Electrolyte Application",ACS Macro Letters, Bd. 7, Nr. 7, 5. Juli 2018 (2018-07-05), Seiten 881-885, wurde zwischen dem Prioritäts- und dem Anmeldedatum veröffentlicht und offenbart methyliertes Cyclodextrin-PEO Polyrotaxane.

Laura Imholt et al: "Grafted polyrotaxanes as highly conductive electrolytes for lithium metal batteries", JOURNAL OF POWER SOURCES, Bd. 409, 31. August 2018 (2018-08-31), Seiten 148-158, wurde ebenfalls zwischen dem Prioritäts- und dem Anmeldedatum veröffentlicht und offenbart Cyclodextrin-PEO Polyrotaxane mit Polycaprolacton-Seitenketten.

Ying-Cheng Lin et al.: "Solid polymer electrolyte based on crosslinked polyrotaxane", POLYMER., Bd. 136, 27. Dezember 2017 (2017-12-27), Seiten 121-127, wurde zwischen dem Prioritäts- und dem Anmeldedatum veröffentlicht und offenbart Cyclodextrin-PEO Polyrotaxane mit HDMI Crosslinker.

### Aufgabe und Lösung

Die Aufgabe der Erfindung ist es, einen neuartigen trockenen, d. h. lösungsmittelfreien Festkörperelektrolyten für Anwendungen in Lithium-Ionen-Batterien bereit zu stellen, der die bisherigen Nachteile aus dem Stand der Technik, insbesondere eine geringe ionische Leitfähigkeit überwindet und eine ionische Leitfähigkeit von mindestens 10⁻⁴ S/cm bei Raumtemperatur aufweist. Ferner sollte der Festkörperelektrolyt vorzugsweise eine erhöhte Lithium-Ionenleitfähigkeit aufweisen, wobei die Lithium-Ionenleitfähigkeit den Anteil an der Leitfähigkeit darstellt, der nur von den Lithium-Ionen resultiert. Die Lithium-Ionenleitfähigkeit wird regelmäßig durch die Überführungszahl angegeben, welche möglichst den Wert 1 annehmen sollte, was bedeutet, dass sich die Leitfähigkeit zu 100 % aus der Bewegung der Lithium-Ionen ergibt.

Ferner ist es die Aufgabe eine verbesserte Lithiumionen-Sekundärbatterie bereit zu stellen, die eine verbesserte Leitfähigkeit sowie eine verbesserte Langzeitstabilität aufweist.

Die Aufgaben der Erfindung werden gelöst durch einen trockenen Festkörperelektrolyten mit den Merkmalen des Hauptanspruchs sowie durch einen Lithiumionen-Sekundärbatterie mit den Merkmalen des Nebenanspruchs.

Vorteilhafte Ausgestaltungen des Festkörperelektrolyten und der Lithiumionen-Sekundärbatterie ergeben sich aus den darauf rückbezogenen Ansprüchen.

### Gegenstand der Erfindung

Im Rahmen der Erfindung wurde herausgefunden, dass chemisch modifizierte Polyrotaxane vorteilhaft geeignet sind, als trockene Festkörperelektrolyten, d. h. als lösungsmittelfreie Polymer-Elektrolyte für Lithium-Ionen-Batterien eingesetzt zu werden.

Polyrotaxane sind supramolekulare Strukturen, bei denen ringförmige Moleküle wie Räder auf einem linearen, kettenförmigen Polymer als Achse aufgefädelt vorliegen. Cyclodextrine und Kronenether sind die bekanntesten ringförmigen Moleküle, die bei diesen Strukturen als Räder bislang verwendet wurden. Ring- und Kettenmoleküle sind dabei zwar mechanisch, aber nicht kovalent miteinander verbunden. Erfindungsgemäß sind nur Hauptketten-Polyrotaxane umfasst.

Die vorgenannten Strukturen sind aufgrund der bereits erwähnten inter- und intramolekularen Wechselwirkungen jedoch nachteilig zu starr, um einen schnellen Lithium-Ionen Transport zu ermöglichen.

In der vorliegenden Erfindung wurden daher bislang verwendete Polyrotaxane gezielt chemisch modifiziert, um die inter- und intramolekularen Wasserstoffbrückenbindungen der gebildeten Komplexe, die sonst durch die Hydroxylgruppen entstehen, zu reduzieren. Dies bewirkt, dass weniger kristalline (starre) Materialen erhalten werden.

Die erfindungsgemäße Modifikation betrifft dabei die ringförmigen Moleküle der Cyclodextrine.

Erfindungsgemäß werden die Hydroxylgruppen der Cyclodextrine teilweise oder vollständig durch andere funktionelle Gruppen, wie beispielsweise Alkyl-, Aryl-, Alkenyl- oder Alkinylgruppen oder aber auch kurzkettige Polymergruppen (d.h. Ketten mit bis zu 20 Wiederholeinheiten) ersetzt (modifiziert). Beispielsweise wären Methylgruppen oder auch eine Polycaprolactongruppen eine geeignete Modifikation der vorhandenen Hydroxylgruppen im Sinne der vorliegenden Erfindung.

Bei den außerhalb des beanspruchten Gegenstandes liegenden Kronenethern erfolgt die Modifikation an dem Gerüst, in welches die funktionellen Gruppen, wie beispielsweise Alkyl-, Aryl-, Alkenyl- oder Alkinylgruppen oder aber auch kurzkettige Polymergruppen (d.h. Ketten mit bis zu 20 Wiederholeinheiten) kovalent eingebaut werden.

Es wurde herausgefunden, dass zur Erhöhung der Lithium-Leitfähigkeit sogenannte Einzelionenleiter geeignet sind, bei denen das Anion des zugesetzten Lithiumsalzes vorteilhaft chemisch an die seitlichen Polymerketten gebunden wird und dadurch keinen bzw. nur einen geringen Beitrag zur ionischen Leitfähigkeit liefert.

Das Anion des zugesetzten Lithiumsalzes und auch die polymerische Seitengruppe werden dabei so modifiziert, dass beide miteinander reagieren können und so das Anion chemisch an die Seitengruppe gebunden wird.

Insbesondere wird hierbei das Konzept der Click-Chemie angewendet, bei dem effiziente, stereospezifische, umweltfreundliche Reaktionen in hohen Ausbeuten ablaufen.

Im konkreten Fall kann das Konzept der Thiol-Ene Click Reaktion angewendet werden, bei dem die polymerische Seitengruppe mit einer Allyl-Gruppe versehen wird während das Anion des zugesetzten Lithiumsalzes eine Thiol-Gruppe enthält. Unter Anwendung von Temperatur und/oder UV-Licht und in Anwesenheit eines Initiators kann die Thiol-Ene Click Reaktionen gezielt ablaufen.

Um die Überführungszahl zu verbessern, wird erfindungsgemäß das Anion des zugesetzten Lithiumsalzes chemisch an die polymeren Seitengruppen gebunden, sodass Einzelionenleiter entstehen, für die das Lithium-lon die einzig mobile Spezies darstellt.

Die Überführungszahl gibt den Bruchteil des gesamten elektrischen Stroms an, der nur von den Kationen (Lithium Ionen) transportiert wird, und kann Werte zwischen 0 und 1 annehmen. Sie wird in einem symmetrischen Lithium/Polymer Elektrolyt/Lithium Zellaufbau gemessen.

Die erfindungsgemäß modifizierten Cyclodextrin Moleküle weisen vorteilhaft weniger chemische Wechselwirkungen miteinander auf, wobei in der Regel auch das Verhältnis von Cyclodextrin zu Polymer verändert wird. Insbesondere bewirkt diese Modifizierung, dass die auf den linearen Polymerketten aufgefädelten modifizierten Cyclodextrine regelmäßig einen größeren Abstand zueinander aufweisen als die nicht modifizierten Cyclodextrine (siehe Figur 2).

Dabei können sowohl α- Cyclodextrine, β-Cyclodextrine und auch γ-Cydodextrine in modifizierter Form eingesetzt werden. Auch Mischungen dieser Cyclodextrine sind möglich und im Rahmen dieser Erfindung geeignet.

Auf diese Weise wird die gesamte supramolekulare Struktur verändert und die einzelnen ausgebildeten Kanäle bzw. Röhren sind weniger starr. Diese flexibleren Strukturen ermöglichen wiederum vorteilhaft einen schnelleren Lithium-Ionen Transport.

Neben der chemischen Modifikation weisen die erfindungsgemäß modifizierten Polyrotaxane in einer besonderen Ausführungsform auch lineare Polymerketten auf, deren Enden zumindest teilweise sperrige, voluminöse Endgruppen aufweisen, die ein Herabrutschen der ringförmigen Moleküle von den linearen Polymerketten vorteilhaft verhindern.

Eine solche sperrige Endgruppe kann beispielsweise dadurch erhalten werden, dass die eingesetzten linearen Polymerketten an ihren Enden zumindest teilweise funktionelle Gruppen aufweisen, die polymerisiert werden können, und so zu sperrigen, voluminösen Endgruppen führen.

Experimentelle Versuche zeigen außerdem, dass bei den Komplexen basierend auf modifizierten Cyclodextrinen der Anteil an Lithium-Ionen außerhalb der gebildeten Kanäle höher ist als bei Komplexen, die auf nicht modifizierten Cyclodextrinen basieren.

Diese Erkenntnisse werden auch durch erste Computer-Simulationen bestätigt. Dies bedeutet, dass bei der vorliegenden Erfindung der Hauptmechanismus des Lithium-Ionen Transportes wahrscheinlich darauf beruht, dass die Lithium Ionen außerhalb der gebildeten Polyrotaxan-Kanalstruktur entlang der funktionellen Gruppen der modifizierten Cyclodextrine transportiert werden, und nicht wie in der bekannten Literatur beschrieben innerhalb der Kanäle entlang des Polymers.

Zudem wird durch die erfindungsgemäße Modifizierung die Koordinierung der Lithium-lonen an das zyklische Cyclodextrin-Molekül verbessert und so der Transport der Lithium-lonen entlang der modifizierten Cyclodextrine günstig beeinflusst bzw. optimiert.

Die Herstellung solcher modifizierter Polyrotaxane ist relativ einfach zu bewerkstelligen.

Cyclodextrine sind Abbauprodukte der Stärke und daher sehr günstige, umweltfreundliche Edukte. Auch die Modifizierung der Cyclodextrine und Herstellung der Polyrotaxane lassen sich über einfache, günstige und gut skalierbare Synthesen realisieren.

Als Ergebnis wird ein trockener, d. h. lösungsmittelfreier Polymer-Elektrolyt für die Verwendung in aufladbaren Lithium-Sekundärbatterien vorgeschlagen, der eine Lithium-lonen leitfähige Polymer-Matrix und ein Lithium Salz umfasst, welches in der Polymermatrix verteilt ist und zumindest teilweise chemisch durch die Polymer-Matrix gebunden wird.

Bei dem erfindungsgemäßen Polymer-Elektrolyt handelt es sich um einen lösungsmittelfreien Elektrolyten mit einer Lithium-Ionen leitfähigen Polymer-Matrix umfassend wenigstens ein Pseudo-Polyrotaxan, welches wenigstens ein lineares Polymer, und zudem modifiziertes Cyclodextrin, die um das lineare Polymer angeordnet sind, umfasst.

Bei dem linearen, kettenförmigen Polymer kann es sich insbesondere um Polyethylenoxid (PEO) oder PEO-Derivate handeln. Das Molekulargewicht des linearen Moleküls liegt zwischen 500 und 10.000 g/mol, insbesondere bevorzugt zwischen 1000 und 3000 g/mol. Erfindungsgemäß handelt es sich bei den ringförmigen Molekülen um vollständig oder teilweise chemisch modifizierte Cyclodextrine Darunter ist zu verstehen, dass die vorhandenen Hydroxylgruppen der ringförmigen Moleküle teilweise oder vollständig mit funktionellen Gruppen, wie Alkyl-, Aryl-, Alkenyl-, Alkinylgruppen (Cₙ, mit n ≤ 5) oder aber kurzkettigen Polymergruppen (das bedeutet Ketten mit bis zu 20 Wiederholeinheiten) modifiziert sind.

Als Lithium Salz sind insbesondere folgende Lithium Salze für den Einsatz in dem erfindungsgemäßen Polymerelektrolyt geeignet:
Lithium Perchlorat (LiClO₄),
Lithium Hexafluorophosphat (LiPF₆),
Lithium tetrafluoroborat (LiBF₄),
Lithium hexafluoroarsenat(V) (LiAsF6),
Lithium Trifluoromethansulfonat (LiCF₃SO₃),
Lithium bis-trifluoromethyl sulfonylimid (LiN(CF₃SO₂)₃,
Lithium Bis(oxalato)borat (LiBOB),
Lithium Oxalyldifluoroborat (LiBF₂C₂O₄),
Lithium Nitrat (LiNO₃),
Li-Fluoroalkyl-Phosphat (LiPF₃(CF₂CF₃)₃),
Lithium Bisperfluoroethysulfonylimid (LiBETI),
Lithium Bis(trifluoromethanesulphonyl)imid,
Lithium Bis(fluorosulphonyl)imid,
Lithium Trifluoromethanesulfonimid (LiTFSI)
oder eine beliebige Kombination dieser Salze.

Erfindungsgemäß beträgt das Verhältnis von Wiederholeinheit des Polymers zu Salz 3:1 bis 20:1.

In einer vorteilhaften Ausgestaltung des Polymer-Elektrolyten kann dieser neben der Polymer-Matrix noch zusätzliche Additive aufweisen. Diese Additive liegen außerhalb der Polyrotaxan-Struktur vor und werden nicht vom Cyclodextrin oder Kronenether eingeschlossen.

Die Additive können der verbesserten Filmbildung oder aber zur größeren mechanischen Stabilität des Polymerfilms dienen. Üblicherweise können Additive mit bis zu 5 Gew.-% bezogen auf das Polyrotaxan eingesetzt werden.

Als im Sinne der Erfindung geeignete Additive sind insbesondere zu nennen:
Polypropylenoxid (PPO),
Polyacrylonitril (PAN),
Polymethylmethacrylat (PMMA),
Polyvinylidendifluorid (PVDF),
Polyvinylchlorid (PVC),
Polydimethylsiloxan (PDMS) und
Polyvinylidendifluorid-hexafluoropropylen (PVDF-HFP),
sowie ein Derivat dieser und/oder eine beliebige Kombination dieser Additive.

Auch Polyethylenoxid (PEO) kann als Additiv zugesetzt werden. In diesem Fall kann das PEO jedoch nicht mehr Auffädeln sondern dient als Additiv beispielsweise der besseren Filmbildung.

Diese Additive können vorzugsweise mit einem Gewichtsanteil von > 0 bis 5 Gew.-% bezogen auf das Polyrotaxan eingesetzt werden.

Die erfindungsgemäßen, chemisch modifizierten Systeme zeigen aufgrund der vorgenannten Strukturveränderungen stark erhöhte ionische Leitfähigkeiten, insbesondere bei Raumtemperatur. Eine starke Erhöhung bedeutet in diesem Fall eine Verbesserung um mindestens 3 Größenordnungen, verglichen mit dem bisherigen Stand der Technik.

Ferner zeigen die erfindungsgemäß chemisch modifizierten Systeme eine verbesserte elektrochemische Stabilität, wobei auch die für industrielle Anwendung unabdingbar notwendige stabile Langzeit-Zyklisierung mittels der neu entwickelten trockenen Polymer-Elektrolyte in Lithium/LiFePO₄ Zellen bei hohen Lade- und Entladeströmen (≥ 1 C) reproduzierbar realisiert werden kann. Eine Zyklisierung einer Batterie umfasst einen Auf- und einen Entladevorgang, das heißt, wenn eine bestimmte Energiemenge in den Speicher geladen und auch wieder daraus entnommen wurde.

In einer besonderen Ausgestaltung der Erfindung weisen die linearen Polymere an wenigstens einem Ende eine oder mehrere funktionelle Gruppen auf, die ebenfalls polymerisiert werden können und dadurch besonders sperrige, voluminöse Endgruppen bilden.

Die erfindungsgemäß bereit gestellten modifizierten Polyrotaxane zeigen als neue Stoffklasse für die Verwendung als trockener Polymer-Elektrolyt besondere Vorteile bei der Schnellladefähigkeit und zudem einen hohe Leitfähigkeit in Energiespeichersystemen, insbesondere in Lithium-Ionen Batterien.

Diese neue Stoffklasse kann zudem vorteilhaft als Binder in Kathoden und Anoden, als Additiv in einem Flüssigelektrolyten, als Gel-Polymer Elektrolyt, als Festkörperbatterien mit polymerbeschichteten Anoden und Kathoden, als Separatoren in Multischichtsystemen und in diverse Polymerkombinationen, wie z. B. Block-Copolymere, eingesetzt werden.

Die erfindungsgemäß bereit gestellten modifizierten Polyrotaxane sind als neue Stoffklasse aber nicht nur auf den Einsatz als Elektrolyt beschränkt, sondern können allgemein in einem Multischichtsystem verwendet werden, bei dem einzelne Schichten bestehend aus verschiedenen Materialien miteinander kombiniert werden, sodass vorteilhaft die positiven Eigenschaften der Einzelschichten miteinander kombiniert werden.

### Spezieller Beschreibungsteil

Im Weiteren wird die Erfindung anhand von Ausführungsbeispielen, Figuren und Tabellen näher erläutert, ohne dass dies zu einer Einschränkung des breiten Schutzumfanges führen soll.

Dabei zeigen:
- Figur 1:: Schematische Darstellung der Struktur eines Polyrotaxans: oben: ein Hauptketten-Polyrotaxan mit "Stoppern" an beiden Enden, unten: ein Seitenketten-Polyrotaxan.
- Figur 2:: Modifikationen von Cyclodextrinen.
- Figur 3:: Vergleich der Strukturen eines nicht modifizierten Polyrotaxans (links) und eines erfindungsgemäß modifizieren Polyrotaxans (rechts).
- Figur 4:: Leitfähigkeitsmessungen.
- Figur 5:: Untersuchungsergebnisse der Zyklisierung einer erfindungsgemäßen Lithium/LiFePO₄-Batterie mit einem erfindungsgemäßen trockenen Polymer-Elektrolyt.
- Figur 6:: Ergebnisse einer Untersuchung zum elektrochemischen Stabilitätsfenster von a) nicht modifizierten Polyrotaxanes und b) chemisch modifizierten Polyrotaxanen (in der Probe hier gezeigt sind die Hydroxylgruppen des Polyrotaxans mit kurzkettigen Polycaprolacton Keten modifiziert).

Bei der Herstellung von Polyrotaxanen werden zuerst die Cyclodextrine oder Kronenether auf das lineare Polymer aufgefädelt und in einem zweiten Schritt die Stopper hinzugefügt.

Bei der erfindungsgemäßen Modifizierung der Cyclodextrine mit Alkyl-, Aryl-, Alkenyl- oder Alkinylgruppen wird zuerst die Modifizierung durchgeführt und anschließend die bereits modifizierten Cyclodextrine auf das Polymer aufgefädelt. Werden die Cyclodextrine mit kurzkettigen Polymergruppen modifiziert, werden zuerst die nicht-modifizierten Cyclodextrine auf das Polymer aufgefädelt und erst in einem weiteren Schritt die Polymerseitengruppen sowie der Stopper angebracht. Dabei können die Stopper aus voluminösen aromatischen Molekülen bestehen oder aber auch funktionelle Gruppen besitzen, die ebenfalls polymerisiert werden können, sodass diese voluminösen Polymerketten als Stopper dienen.

Ausführungsbeispiel für eine Synthese: Methylierung von Cyclodextrin:
Das entsprechende Cyclodextrin wird in einem Lösungsmittel gelöst und die Lösung wird auf 0 °C gekühlt. Anschließend wird Natriumhydrid im Überschuss hinzugegeben und die Lösung für 30 min bei Raumtemperatur gerührt. Wiederrum bei 0 °C wird im nächsten Schritt Methyliodid langsam hinzugegeben. Zuletzt wird das entstandene Produkt aufgereinigt und getrocknet.

Ausführungsbeispiel für eine Synthese: Pseudo-Polyrotaxan:
Es wird eine gesättigte Lösung des modifizierten Cyclodextrins hergestellt. Außerdem wird eine Lösung aus Polyethylenoxid und LiTFSI (Verhältnis von Polymer-Wiederholeinheit zu Li-Salz von 5:1) hergestellt. Anschließend werden beide Lösungen zusammen gegeben und das entstehende Präzipitat wurde abgetrennt, gewaschen und getrocknet.

Zur Überprüfung der verbesserten ionischen Leitfähigkeit wurden Leitfähigkeitsuntersuchungen an dem zuvor beschriebenen erfindungsgemäßen trockenen Elektrolyten sowie an einem Referenz-Elektrolyten (d.h., ein nicht-modifiziertes Polyrotaxan) durchgeführt.

Die Leitfähigkeitsmessungen wurden am Novocontrol mit der Software Windeta in einem Temperaturbereich von 20 °C - 100 °C und einem Frequenzbereich von 2*10⁷ Hz bis 1*10⁻¹ Hz gemessen. Die Ergebnisse sind in der Tabelle 1 aufgelistet. Beide Systeme unterscheiden sich ausschließlich in der Modifizierung der Hydroxylgruppen des Cyclodextrins. Alle anderen Parameter, wie Messmethode, Lithium-Salz-Gehalt, Art des Cyclodextrins, sind bei beiden Systemen identisch.

**Tabelle 1:**

| | ionische Leitfähigkeit bei T = 25 °C/ S cm⁻¹ | ionische Leitfähigkeit bei T= 60 °C/ S cm⁻¹ |
|---|---|---|
| Polyrotaxane mit nicht modifizierten Cyclodextrinen | 7,1 × 10⁻⁸ | 1,0 × 10⁻⁶ |
| Polyrotaxane mit modifizierten Cyclodextrinen | 2,2 × 10⁻⁴ | 1,1 × 10⁻³ |

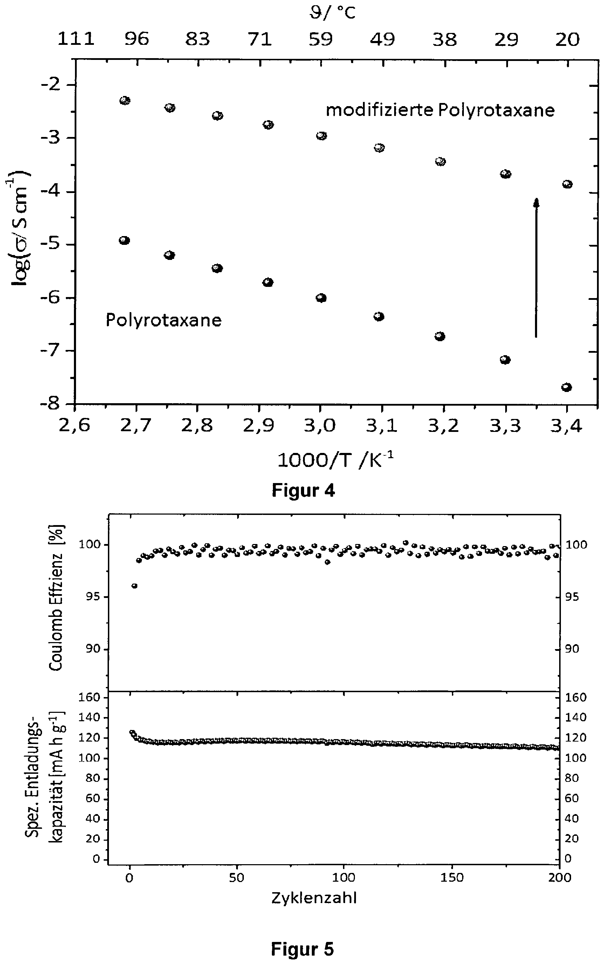

Zum Vergleich sind in der Figur 4 auch Leitfähigkeiten aus der Literatur ^{[22, 23, 24]} im Bereich von 10⁻⁸ - 10⁻⁹ S/cm bei Raumtemperatur dargestellt.

Die modifizierten Polyrotaxane aus Tabelle 1, weisen regelmäßig eine Überführungszahl von 0,6, die neu eingeführten Einzelionenleiter sogar eine Überführungszahl von 0,8 auf.

Weiterhin wurden Untersuchungen zur Zyklisierung einer Lithium/LiFePO4-Zelle in einem Bereich von 2,5 - 3,8 V mit einem erfindungsgemäßen trockenen Polymer-Elektrolyten bei 60 °C durchgeführt (siehe dazu Figur 5). Es wurden hohe Lade- und Entladeraten von 1 C eingestellt. Die Coulombsche Effizienz (Ladewirkungsgrad, berechnet aus dem Verhältnis der Lade- zu Entladekapazität) im ersten Zyklus wies ca. 96 % auf. Selbst bei über 200 Zyklen konnte eine stabile Zyklisierung festgestellt werden. Unter einer stabilen Zyklisierung wird dabei ein nahezu gleichbleibende Kapazität bei steigender Zyklenzahl verstanden.

Um die oxidative Stabilität eines Materials zu bestimmen, kann die Lineare Vorschubvoltammetrie verwendet werden. Hierbei wird ein externes Spannungsprofil bezogen auf eine Referenz (Li/Li⁺) an die zu untersuchende Probe angelegt und die gemessene Stromdichte an der Gegenelektrode aufgezeichnet. Da bei der Zersetzung Ladungsträger wie Elektronen und Ionen entstehen, wird sich dabei die Stromdichte erhöhen. Demnach zeigt ein Anstieg in der Stromdichte die Zersetzung des Elektrolyten an.

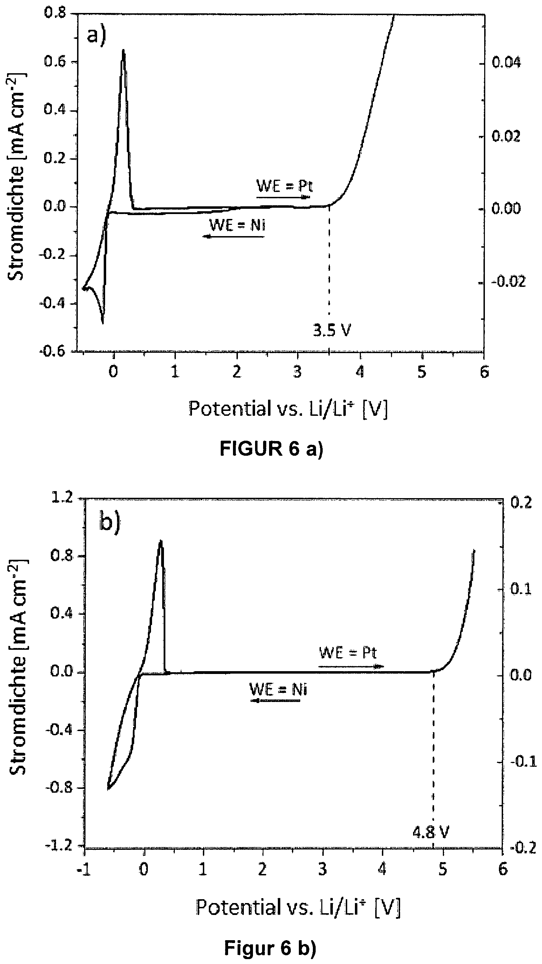

In der Figur 6 sind die Ergebnisse der Untersuchungen zum elektrochemischen Stabilitätsfenster in Figur 6 a) für nicht modifizierten Polyrotaxanes und in Figur 6 b) für chemisch modifizierte Polyrotaxane dargestellt. Hier dargestellt sind die Hydroxylgruppen des Polyrotaxans mit kurzkettigen Polycaprolacton Keten modifiziert.

Alle Systeme, bei denen die Hydroxylgruppen modifiziert sind, zeigen vorteilhaft Stabilitäten. bis 4,6 V vs. Li/Li⁺, während nicht-modifizierte Systeme regelmäßig nur eine Stabilität bis 3,5 V vs. Li/Li⁺ aufweisen.

In dieser Anmeldung zitierte Literatur:
[1] Wen, J.; Yu, Y.; Chen, C., Materials Express 2012, 2 (3), 197-212.
[2] Perea, A.; Dontigny, M.; Zaghib, K., J. Power Sources 2017, 359,182-185.
[3] Han, X.; Ouyang, M.; Lu, L.; Li, J.; Zheng, Y.; Li, Z., J. Power Sources 2014, 251, 38-54.
[4] Knauth, P., Solid State lonics 2009, 180 (14), 911-916.
[5] Ma, C.; Chen, K.; Liang, C.; Nan, C.-W.; Ishikawa, R.; More, K.; Chi, M., Energy & Environmental Science 2014, 7 (5),1638-1642.
[6] Xue, Z.; He, D.; Xie, X., J. Mater. Chem. A 2015, 3 (38), 19218-19253.
[7] Münchow, V.; Di Noto, V.; Tondello, E., Electrochim. Acta 2000, 45 (8), 1211-1221.
[8] Tanaka, R.; Sakurai, M.; Sekiguchi, H.; Mori, H.; Murayama, T.; Ooyama, T., Electrochim. Acta 2001, 46 (10), 1709-1715.
[9] Zhao, Y.; Wu, C.; Peng, G.; Chen, X.; Yao, X.; Bai, Y.; Wu, F.; Chen, S.; Xu, X., J. Power Sources 2016, 301, 47-53.
[10] He, W.; Cui, Z.; Liu, X.; Cui, Y.; Chai, J.; Zhou, X.; Liu, Z.; Cui, G., Electrochim. Acta 2017, 225, 151-159.
[11] Mindemark, J.; Imholt, L.; Montero, J.; Brandell, D., Journal of Polymer Science Part A: Polymer Chemistry 2016, 54 (14), 2128-2135.
[12] Kaskhedikar, N.; Burjanadze, M.; Karatas, Y.; Wiemhöfer, H. D., Solid State lonics 2006,177 (35), 3129-3134.
[13] Yue, L.; Ma, J.; Zhang, J.; Zhao, J.; Dong, S.; Liu, Z.; Cui, G.; Chen, L., Energy Storage Materials 2016, 5, 139-164.
[14] Osada, I.; de Vries, H.; Scrosati, B.; Passerini, S., Angew. Chem. Int. Ed. 2016, 55 (2), 500-513.
[15] Karuppasamy, K.; Prasanna, K.; Kim, D.; Kang, Y. H.; Rhee, H. W., RSC Advances 2017, 7 (31), 19211-19222.
[16] Liu, M.; Zhou, D.; He, Y.-B.; Fu, Y.; Qin, X.; Miao, C.; Du, H.; Li, B.; Yang, Q.-H.; Lin, Z.; Zhao, T. S.; Kang, F., Nano Energy 2016, 22, 278-289.
[17] Jankowsky, S.; Hiller, M. M.; Fromm, O.; Winter, M.; Wiemhöfer, H. D., Electrochim. Acta 2015, 155, 364-371.
[18] Karuppasamy, K.; Reddy, P. A.; Srinivas, G.; Tewari, A.; Sharma, R.; Shajan, X. S.; Gupta, D., Journal of Membrane Science 2016, 514, 350-357.
[19] Shim, J.; Kim, L.; Kim, H. J.; Jeong, D.; Lee, J. H.; Lee, J.-C., Polymer 2017, 122, 222-231.
[20] Ben youcef, H.; Garcia-Calvo, O.; Lago, N.; Devaraj, S.; Armand, M., Electrochim. Acta 2016, 220, 587-594.
[21] Zhang, J.; Zhao, N.; Zhang, M.; Li, V.; Chu, P. K.; Guo, X.; Di, Z.; Wang, X.; Li, H., Nano Energy 2016, 28, 447-454.
[22] Yang, L. Y.; Wei, D. X.; Xu, M.; Yao, Y. F.; Chen, Q., Angew Chem Int Ed Engl 2014, 53 (14), 3631-5.
[23] Yang, L. Y.; Fu, X. B.; Chen, T. Q.; Pan, L. K.; Ji, P.; Yao, Y. F.; Chen, Q., Chemistry 2015, 21 (17), 6346-9.
[24] Fu, X.-B.; Yang, L.-Y.; Ma, J.-Q.; Yang, G.; Yao, Y.-F.; Chen, Q., Polymer 2016, 105, 310-317*.*

## Patentansprüche

1. Lösungsmittelfreier Polymerelektrolyt für die Anwendung in einer wiederaufladbaren Lithiumionen-Sekundärbatterie,
umfassend eine für Lithium-Ionen leitfähige Polymermatrix und ein Lithiumsalz, wobei die Polymermatrix wenigstens ein Pseudo-Polyrotaxan aufweist, welches wenigstens ein lineares Polymer und wenigstens ein ringförmiges Molekül umfasst, und wobei das Lithiumsalz in der Polymermatrix angeordnet und zumindest teilweise chemisch an die Polymermatrix gebunden ist,
***dadurch gekennzeichnet,***
**dass** die Polymermatrix wenigstens ein Pseudo-Polyrotaxan mit
- wenigstens einem ganz oder teilweise chemisch modifizierten Cyclodextrin aufweist, bei dem die vorhandenen Hydroxylgruppen des Cyclodextrins teilweise oder vollständig durch funktionelle Gruppen modifiziert sind, und
- wobei die funktionellen Gruppen Alkyl-, Aryl-, Alkenyl-, Alkinylgruppen Cₙ mit n ≤ 5 oder aber kurzkettigen Polymergruppen mit bis zu 20 Wiederholeinheiten umfassen.

2. Polymerelektrolyt nach Anspruch 1,
bei dem das Pseudo-Polyrotaxan der Polymermatrix ein Polyethylenoxid als lineares Polymer umfasst.

3. Polymerelektrolyt nach einem der Ansprüche 1 bis 2,
bei dem das Pseudo-Polyrotaxan der Polymermatrix ein lineares Polymer mit einem Molekulargewicht zwischen 500 und 10000 g/mol aufweist.

4. Polymerelektrolyt nach einem der Ansprüche 1 bis 3,
mit wenigstens einem zusätzlichen Additiv mit einem Gewichtsanteil von 1 bis 5 Gew.-% bezogen auf das Gewicht des Pseudo-Polyrotaxans, ausgewählt aus der Gruppe Poly(ethylene oxid) (PEO), Poly(propylene oxid) (PPO), Poly(acrylonitril) (PAN), Poly(methyl methacrylat) (PMMA), Poly(vinyliden-difluorid) (PVDF), Polyvinylchlorid, Polydimethylsiloxan und Poly(vinyliden-difluorid)-hexafluoropropylen (PVDF-HFP) sowie ein Derivat dieser und/oder eine beliebige Kombination dieser Additive.

5. Polymerelektrolyt nach einem der Ansprüche 1 bis 4,
mit einem Lithiumsalz ausgewählt aus der Gruppe Lithium Perchlorat, LiClO₄, Lithium Hexafluorophosphat, LiPF₆, Lithium tetrafluoroborat, LiBF₄, Lithium hexafluoroarsenat(V), LiAsF₆, Lithium Trifluoro-methansulfonat, LiCF₃SO₃, Lithium bis-trifluoromethyl sulfonylimide, LiN(CF₃SO₂)₂, Lithium Bis(oxalato)borat, LiBOB, Lithium Oxalyldifluoroborat, LiBF₂C₂O₄, Lithium Nitrat, LiNO₃, Li-Fluoroalkyl-Phosphat, LiPF₃(CF₂CF₃)₃ Lithium Bisperfluoroethysulfonylimid, LiBETI, Lithium Bis(trifluoromethanesulphonyl)imid, Lithium Bis(fluorosulphonyl)imid, Lithium Trifluoromethanesulfonimid, LiTFSI oder eine beliebige Kombination dieser Salze.

6. Polymerelektrolyt nach einem der Ansprüche 1 bis 5,
bei dem zumindest einige Enden des linearen Polymers durch sperrige, voluminöse Gruppen modifiziert sind.

7. Lithium-Sekundärbatterie umfassend eine Anode, eine Kathode und einen trockenen, lösungsmittelfreien Polymerelektrolyt gemäß einem der Ansprüche 1 bis 6.

8. Lithium-Sekundärbatterie nach Anspruch 7,
umfassend eine Lithium-Ionen Batterie, eine aufladbare Lithium Metall Batterie, eine Lithium-Schwefel oder Lithium-Luft Batterie, eine Alkali- oder Erdalkalimetall Batterie oder Aluminiummetall Batterie.

## Claims

1. A solvent-free polymer electrolyte for use in a rechargeable lithium-ion secondary battery,
comprising a polymer matrix which is conductive for lithium ions, and a lithium salt, wherein the polymer matrix has at least one pseudo-polyrotaxane which comprises at least one linear polymer and at least one ring-shaped molecule, and wherein the lithium salt is arranged in the polymer matrix and is at least partly chemically bonded to the polymer matrix,
***characterized in* that** the polymer matrix has at least one pseudo-polyrotaxane with
- at least one fully or partially chemically modified cyclodextrin, in which the existing hydroxyl groups of the cyclodextrin are partially or completely modified by functional groups, and
- wherein the functionals groups comprise alkyl, aryl, alkenyl, alkynyl groups Cₙ with n ≤ 5 or else short-chain polymer groups with up to 20 repeats.

2. The polymer electrolyte according to claim 1,
in which the pseudo-polyrotaxane of the polymer matrix comprises a polyethylene oxide as the linear polymer.

3. The polymer electrolyte according to any one of claims 1 to 2,
in which the pseudo-polyrotaxane of the polymer matrix has a linear polymer, having a molecular weight of between 500 and 10000 g/mol.

4. The polymer electrolyte according to any one of claims 1 to 3,
having at least one additional additive with a weight fraction of 1 to 5% by weight, based on the weight of the pseudo-polyrotaxane, selected from the group of poly(ethylene oxide) (PEO), poly(propylene oxide) (PPO), poly(acrylonitrile) (PAN), poly(methyl methacrylate) (PMMA), poly(vinylidene difluoride) (PVDF), polyvinyl chloride, polydimethylsiloxane and poly(vinylidene difluoride)-hexafluoropropylene (PVDF-HFP) as well as a derivative thereof and/or any combination of such additives.

5. The polymer electrolyte according to any one of claims 1 to 4,
having a lithium salt, selected from the group of lithium perchlorate, LiClO₄, lithium hexafluorophosphate, LiPF6, lithium tetrafluoroborate, LiBF₄, lithium hexafluoroarsenate(V), LiAsF₆, lithium triflouromethanesulfonate, LiCF₃SO₃, lithium bis-trifluoromethylesulfonylimide, LiN(CF₃SO₂)₂, lithium bis(oxalato)borate, LiBOB, lithium oxalyldifluoroborate, LiBF₂C₂O₄, lithium nitrate, LiNO₃, Li-fluoroalkyl phosphate, LiPF₃(CF₂CF₃)₃, lithium bisperfluoroethysulfonylimide, LiBETI, lithium bis(trifluoromethanesulfonyl)imide, lithium bis(fluorosulfonyl)imide, lithium trifluoromethanesulfonimide, LiTFSI, or any combination of such salts.

6. The polymer electrolyte according to any one of claims 1 to 5,
in which at least some ends of the linear polymer are modified by bulky, voluminous groups.

7. A lithium secondary battery, comprising an anode, a cathode, and a dry, solvent-free polymer electrolyte according to any one of claims 1 to 6.

8. The lithium secondary battery according to claim 7, comprising a lithium-ion battery, a rechargeable lithium-metal battery, a lithium-sulfur or lithium-air battery, an alkaline or alkaline-earth metal battery or an aluminum metal battery.

## Revendications

1. Electrolyte polymère sans solvant pour l'application dans une batterie secondaire à ions lithium rechargeable, comprenant une matrice polymère conductrice des ions lithium et un sel de lithium, dans lequel la matrice polymère a au moins un pseudo-polyrotaxane, qui comprend au moins un polymère linéaire et au moins une molécule cyclique, et dans lequel le sel de lithium est disposé dans la matrice polymère et est relié au moins en partie chimiquement à la matrice polymère,
**caractérisé**
- **en ce que** la matrice polymère a au moins un pseudo-polyrotaxane avec
- au moins une cyclodextrine modifiée chimiquement en tout ou partie, les groupes hydroxyles présents de la cyclodextrine étant modifiés en tout ou partie par des groupes fonctionnels, et
- dans lequel les groupes fonctionnels comprennent des groupes alcoyle, aryle, alcényle, alcinyle Cₙ avec n ≤ 5 ou des groupes polymères à chaîne courte ayant jusqu'à 20 motifs récurrents.

2. Electrolyte polymère suivant la revendication 1,
dans lequel le pseudo-polyrotaxane de la matrice polymère comprend un poly(oxyde d'éthylène) comme polymère linéaire.

3. Electrolyte polymère suivant l'une des revendications 1 à 2,
dans lequel le pseudo-polyrotaxane de la matrice polymère a un polymère linéaire d'un poids moléculaire compris entre 500 et 10000 g/mol.

4. Electrolyte polymère suivant l'une des revendications 1 à 3,
comprenant au moins un additif supplémentaire en une proportion en poids de 1 à 5 % en poids par rapport au poids du pseudo-polyrotaxane, choisi dans la groupe poly(oxyde d'éthylène) (PEO), poly(oxyde de propylène) (PPO), poly(acrylonitrile) (PAN), poly(méthacrylate de méthyle) (PMMA), poly(difluorure de vinylidène) (PVDF), polychlorure de vinyle, polydiméthylsiloxane, poly(difluorure de vinylidène)-hexafluoropropylène (PVDF-HPF), ainsi qu'un dérivé de ceux-ci et/ou n'importe quelle combinaison de ces additifs.

5. Electrolyte polymère suivant l'une des revendications 1 à 4,
comprenant un sel de lithium choisi dans le groupe perchlorate de lithium, LiClO₄, hexafluorophosphate de lithium, LiPF₆, tetrafluoroborate de lithim, LiBF₄, hexafluoroarséniate (V), LiAsF₆, trifluorométhanesulfonate de lithium, LiCF₃SO₃, bistrifluorométhylsulfonylimide de lithium, LiN(CF₃SO₂)₂, bis(oxalato)borate de lithium, LiBOB, oxalyldifluoroborate de lithium, LiBF₂C₂O₄, nitrate de lithium, LiNO₃, fluoroalcoyl-phosphate de Li, LiPF₃(CF₂CF₃)₃, bisperfluoroéthylsulfonylimide de lithium, LiBETI, bis(trifluorométhanesulfonyl)imide de lithium, bis(fluorosulfonyl)imide de lithium, trifluorométhanesulfo-nimide de lithium, LiTFSI ou n'importe quelle combinaison de ces sels.

6. Electrolyte polymère suivant l'une des revendications 1 à 5,
dans lequel au moins certaines extrémités du polymère linéaire sont modifiées par des groupes volumineux encombrants.

7. Batterie secondaire au lithium comprenant une anode et une cathode et un électrolyte polymère sec sans solvant suivant l'une des revendications 1 à 6.

8. Batterie secondaire au lithium suivant la revendication 7, comprenant une batterie aux ions lithium, une batterie rechargeable au métal lithium, une batterie lithium - souffre ou lithium - air, une batterie au métal alcalin ou au métal alcalino-terreux ou une batterie au métal aluminium.
